# EUROPEAN PATENT SPECIFICATION

(11) **EP 0 327 207 B1**
(45) Date of publication and mention of the grant of the patent: **14.07.1993**
(21) Application number: 89300285.7
(22) Date of filing: 12.01.1989
(51) Int. Cl.: G11B 21/10

(54) **A method of writing a sector servo pattern for a record disk storage device**
Verfahren zum Schreiben der Sektorservomuster für Plattenspeichervorrichtung
Méthode d'écriture de servoconfiguration des secteurs pour un dispositif de stockage à disque d'enregistrement

(30) Priority: 03.02.1988 JP 22179/88
(43) Date of publication of application: 09.08.1989
(73) Proprietor: International Business Machines Corporation, Armonk, N.Y. 10504 (US)
(72) Inventor: Mine, Shingi, Yokohama-shi Kanagawa-ken (JP); Miwa, Yoichi, Machida-shi Toyko-to (JP); Ono, Hiroyuki, Fujisawa-shi Kanagawa-ken (JP)
(74) Representative: Moss, Robert Douglas

(56) References cited:
- EP-A- 0 042 931
- DE-A- 2 128 816
- PATENT ABSTRACTS OF JAPAN vol. 8, no. 159 (P-289)(1596) 24 July 1984;& JP-A-5956214
- PATENT ABSTRACTS OF JAPAN vol. 2, no. 108 (E-055)(5816) 8 September 1978;& JP-A-5374009

## Description

This invention relates to a method of writing a sector servo pattern on the recording surfaces of record disks in a data storage device.

Recently, as the physical size of disk storage devices has been reduced and their storage capacity has been increased, attention has been paid to a sector servo system as a head positioning system applicable to such a small physical size and large storage capacity disk storage device.

Compared with a servo-surface-servo system using a dedicated servo surface, this system has the following advantages, 1) the information required for positioning a transducer head is not recorded on a non-data-recording disk, but is recorded at each sector track on a data recording surface, whereby the total recording area in the disk storage device can be effectively used, and 2) since the information required for positioning the transducer head is arranged on each surface of the disk, deviation (off-track) of the head from the position of the target track due to inclination of the spindle shaft for rotating the disk can be ignored.

Figure 10 of the accompanying drawings shows an arrangement of a servo pattern for head positioning on a recording surface in a conventional sector servo system. In the figure, each of servo patterns 3 is provided at the leading position of each section on a recording surface 2 of a disk 1. Figure 11 shows an enlarged view of each of the servo patterns 3. Each of the servo patterns 3 includes an index servo pattern 3A and a sector servo pattern 3B. The index servo pattern 3A provides positional information on tracks (along the circle), the sector servo pattern 3B provides positional information on sectors (along the radius) and both the patterns 3A and 3B are disposed on the same track center 5. A fixed distance is provided between the patterns 3A and the patterns 3B on adjacent tracks, and the patterns 3A and 3B are arranged discontinuously in a radial direction.

Now, in order to write the servo patterns 3 on the disk 1, the following method has been conventionally used. That is, after all the disks have been fixed to a spindle shaft in a disk device and installed therein, a dedicated, highly accurate position detecting mechanism has been employed to write the servo patterns 3. This is because, if the disks were assembled into the disk device after writing servo patterns on the disks, it would be impossible to cope with errors due to the eccentricity produced in fixing the disks to the spindle shaft.

Such a conventional method is troublesome and of low productivity, because the servo patterns have to be written on the disk while, for each of the disk devices, its shroud is removed in a contamination-free environment such as a clean room and a highly accurate position detecting mechanism using lasers or a clock head has to be employed.

As described above, with conventional technology, the operation of writing servo patterns constitutes a large part of the cost of the products.

The present invention seeks to provide a more efficient method of writing servo patterns.

The invention provides a method of writing a sector servo pattern on each of a plurality of record disks coaxially mounted in a data storage device, the method comprising the successive steps of (a) writing first and second base patterns on one of the disks, the first base pattern comprising a series of portions spaced along one radius of the disk, an individual one of the portions being situated at each track centre, and the second base pattern comprising a set of pattern portions, an individual one of the portions lying substantially continuously over each radius of a plurality of radii defining the positions of servo sectors; and (b) writing a servo sector pattern on each of the record surfaces of the disks under control provided by detection of the base patterns on the one disk.

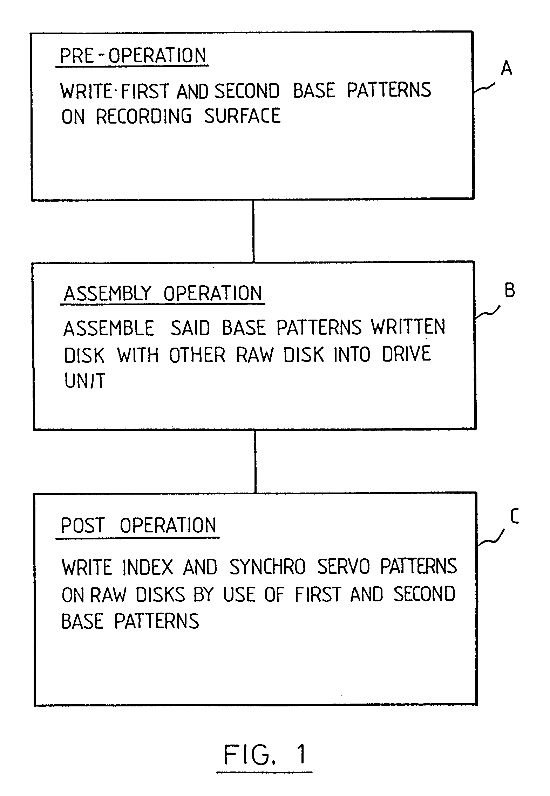

Preferably, the process for writing servo patterns is divided into a pre-operation carried out before the disks are installed into the disk device (fixed to the spindle shaft) and a post-operation that is carried out after the installation. In the pre-operation, the following two base patterns are written on the recording surface of the disk, namely, (a) a first base pattern arranged on each track center along one radial direction of the disk and (b) a second base pattern lying substantially continuously along the radial direction at each position corresponding to the position of a sector (see Block A in Figure 1).

Then, the disks are assembled or installed into the disk device together with blank disks (see Block B in Figure 1). In the post-operation, the servo patterns are written based on the first and second base patterns (see Block C in Figure 1). Here, the expression "substantially continuously" also includes the case where the number of discontinuous portions is smaller than that of the first base pattern even if some discontinuous portions are present in the base pattern, besides the case where the base pattern is completely continuous along the radial direction.

Since the second base patterns are formed substantially continuously along the radial direction, even if the disks on which the first and second base patterns have already been written, are mounted eccentrically to the spindle, the head used in the post-operation can always pass through the above-mentioned second base patterns while the disk is rotating. In other words, in spite of the eccentricity, the head can get information about positions of a predetermined waveform (on sector positions). Accordingly, if the pre-operation is done at the same time for a plurality of disks, and the post-operation is done by using the disks obtained in that way, the post-operation does not necessarily need to be done in a clean room, and the position detecting mechanism used in the post-operation is not required to detect absolute positions but only relative positions. Since highly accurate position detection with respect to absolute positions is not required, the servo pattern writing operation is simpler, and complex equipment is not required.

How the invention can be carried out will now be described by way of example, with reference to the accompanying drawings, in which:
Figure 1 is a flowchart of a servo pattern writing method embodying the invention;
Figure 2 is a diagram of a base pattern writing device used in a pre-operation in a method embodying the invention;
Figure 3 is a block diagram of a control unit of the base pattern writing device of Figure 2;
Figure 4 is a diagram of base patterns written on a disk in the pre-operation;
Figure 5 is a magnified view of part of the base patterns of Figure 4;
Figure 6 is a flowchart of the pre-operation;
Figure 7 is a sectioned diagram of an optical position detecting mechanism and a disk pack used in a post-operation;
Figure 8 is a flowchart of the post-operation;
Figure 9 diagrammatically represents the writing of servo patterns under the control of the detected second base patterns in the post-operation;
Figure 10 is a diagram of an index and sector servo pattern; and
Figure 11 is a magnified view of part of the sector servo pattern of Figure 10.

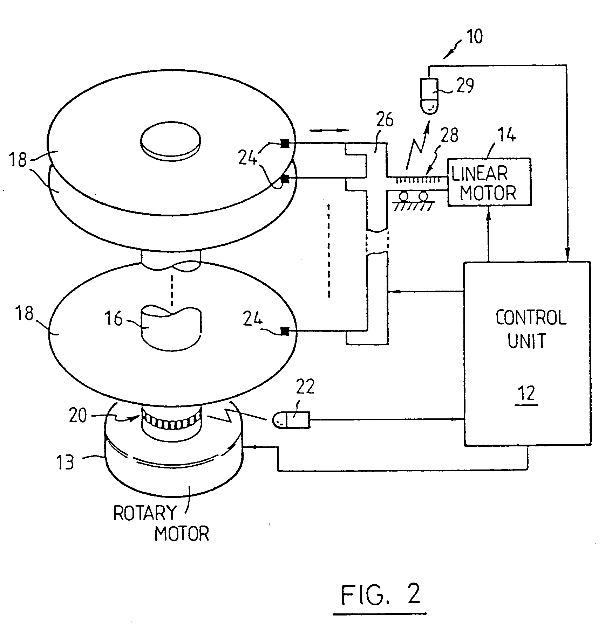

Figure 2 shows a writing device 10 for writing base patterns, which is employed in a pre-operation. The writing device 10, which is not a disk storage device itself, includes a rotary motor 13 and a linear motor 14, both operating under the control of a control unit 12. A plurality of disks 18 are mounted on a spindle shaft 16 driven by the rotary motor 13, and their positions in the direction of rotation can be detected with high accuracy by precise patterns 20 provided along the circumference of the spindle 16 and a sensor 22.

Also, an individual writing head 24 is located on one side of each disk 18, and these heads 24 are coupled with the linear motor 14 through a common carriage 26. The carriage 26 includes precise patterns 28 along the direction of movement thereof, that is, radially of the disk 18. The position of the heads 24 is detected with high accuracy by the precise patterns 28 and a sensor 29.

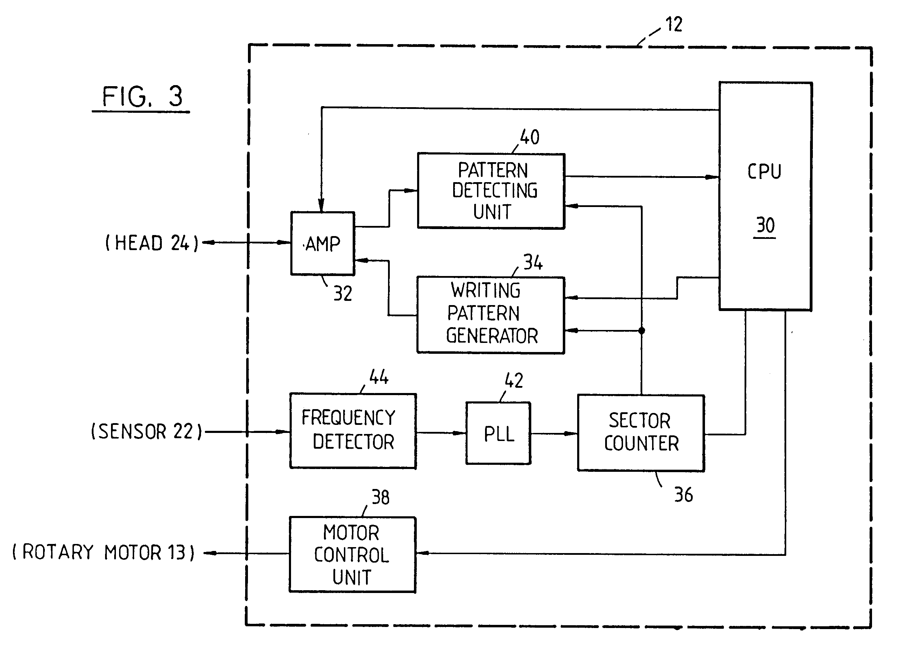

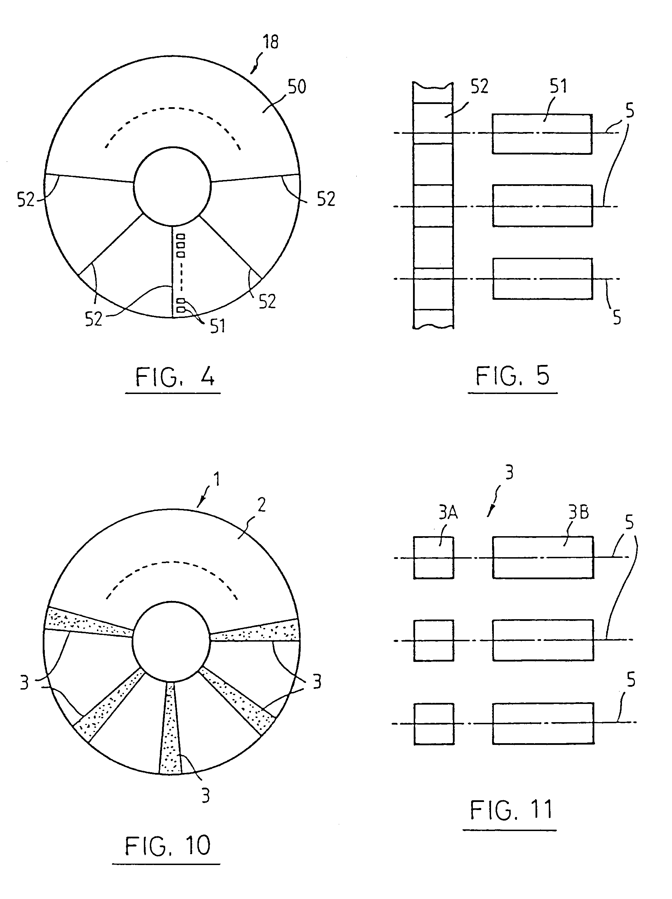

The control unit 12 (Figure 3) includes a CPU 30, which supplies a control signal to a head driving amplifier 32, a writing pattern generator 34, a sector counter 36, and a motor control unit 38. The CPU 30 receives a detected signal from a pattern detecting unit 40. The sector counter 36 is supplied through a PLL 42 with signals corresponding to the positions of angles of rotation of the disk 18 from a frequency detector 44 to count the number of the signals. When the number of the signals reaches a specified count, the sector counter 36 supplies a certain output signal to the pattern detecting unit 40 and the writing pattern generator 34. The writing pattern generator 34 supplies a writing signal to the amplifier 32 in response to the signal from the sector counter 36, and the pattern detecting unit 40 supplies a read-out signal to the CPU 30 in response to the signal from the sector counter 36. Figure 4 shows the first and second base patterns 51 and 52 which are written in the pre-operation on the recording surface 50 of each disk 18. The first base pattern 51 is written along one particular radius of the disk, while the second base pattern 52 is repeated at angular intervals corresponding to the positions of the sectors.

Figure 5 shows an enlarged view of the base patterns 51 and 52. The distance between the centers of adjacent first base patterns 51 along the radial direction is made equal to that between the centers of adjacent tracks. Thus the first base patterns 51 provide positional information about the tracks (positional information along the radial direction). The second base pattern 52 is formed substantially continuously along the radial direction, and especially, in the embodiment shown in the drawing, the second base pattern 52 is completely continuous along the radial direction. The second base pattern 52 provides positional information relating to the sectors (positional information in the direction of rotation). Since the pattern 52 is continuous along the radial direction, the head can always obtain positional information in the direction of rotation while the disks rotate in the post-operation (described below).

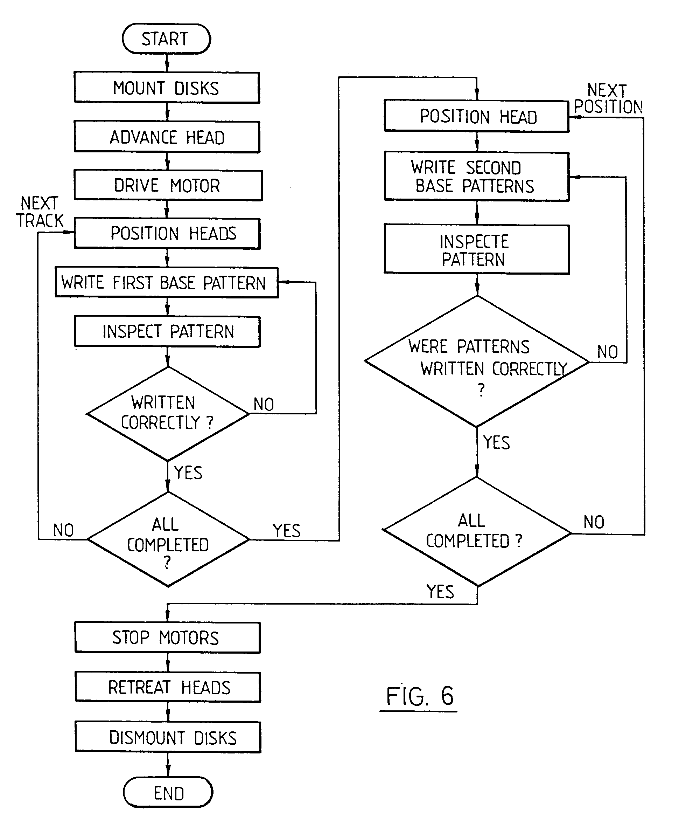

Figure 6 is a flowchart of the preferred pre-operation, in which the second base patterns 52 are written after completion of the writing of the first base patterns 51.

One of the disks 18 on which the first and second base patterns 51 and 52 have been written is then fixed to the spindle shaft of the data storage device in an assembly operation, together with blank or raw disks on which the base patterns have not been written.

Now, the post-operation will be described.

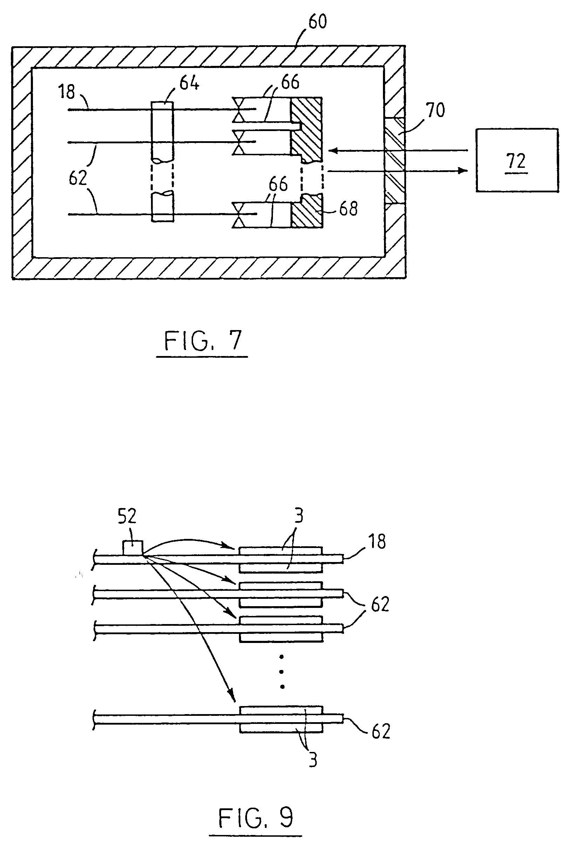

Figure 7 represents a disk storage device including a disk pack 60 containing the disk 18 on which the base patterns have been written and a plurality of blank disks 62, fixed to a spindle shaft 64. Heads 66 are disposed on both surfaces of the disk 18 and on the surfaces of each of the blank disks 62. The heads 66 are moved along the radial direction by a common carriage 68. A transparent window 70 is provided at one part of the disk pack 60, and an optical position detecting means 72 is located on the outside of the window 70. Movement of the carriage 68 is detected through the window 70 by the optical position detecting means 72. The detecting means 72 is not designed to obtain the absolute value of an amount of movement but merely so as to confirm that the heads 66 are stopping during rotation of the disks. Accordingly, variations in the reflectivity and the thickness of the window 70 do not interfere with the post-operation at all.

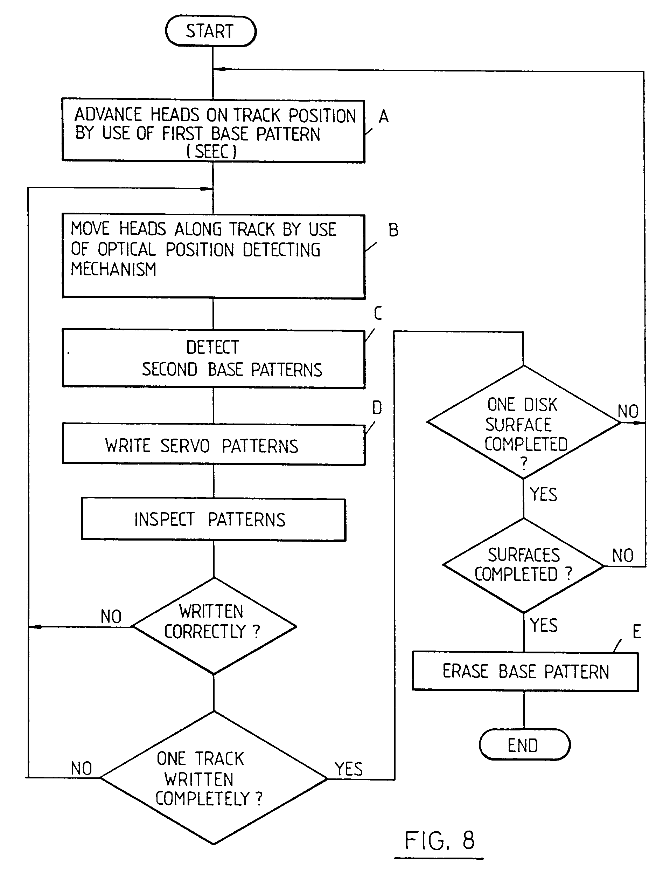

Figure 8 is a flowchart of the post-operation. In the post-operation, the heads 66 are caused to seek-operate to position the heads 66 on the first track based on the first base pattern 51 (see Block A in Figure 8). Then, the spindle shaft 64 is made to rotate with the heads 66 fixed, using the optical position detecting mechanism 72 (see Block B in Figure 8) to read out the second base patterns 52 with the head 66 on the disk 18 set at the read-out mode (Block C). The servo patterns 3 (Figure 10) are written on the recording surface of the blank disk 62 in synchronism with the read-out of the second base patterns 52 (Block D).

Figure 9 represents the servo patterns 3 after they have been written on the disks 62 based on the second base pattern 52 on the disk 18 by the above-mentioned method. As shown in the figure, the servo patterns 3 are also written on the recording surfaces of the disk 18 itself, and the first and second base patterns 51 and 52 which were written on the disk 18 are finally erased (see Block E in Figure 8). The disk 18 is utilized as a record disk in the same way as the other disks 62.

Although the pre-operation has to be performed in a clean room, the base patterns 51 and 52 can be written on a plurality of disks 18 at the same time. Accordingly, since it is unnecessary to carry out the post-operation in a clean room, the method according to the present invention is superior in productivity to the conventional method in which servo patterns are written in a clean room for each disk storage device. The post-operation does not require a lot of time and labour for removing shrouds.

Because the optical position detecting means 72 used in the post-operation only needs to detect a fixed state of the heads 66, it may be a simple mechanism. Further, only the addition of a simple construction to provide the transparent window 70 on the side of the disk pack 60 is necessary. Accordingly, the cost of performing the post-operation is only a small portion of the overall cost.

In place of the optical position detecting means 72 in the above-described embodiment, a mechanism for detecting the absolute position may be used. In general, in the case where an external absolute position detecting mechanism is used, there sometimes occurs a problem with regard to accuracy due to factors of temperature drift, vibration and the like. But, calibration in positioning can be easily performed by using the base patterns 51 and 52. Though poor in accuracy, it is possible to carry out the post-operation without any external position detecting mechanism.

## Claims

1. A method of writing a sector servo pattern on each of a plurality of record disks (18, 62) coaxially mounted in a data storage device, the method comprising the successive steps of (a) writing first and second base patterns (51, 52) on one (18) of the disks, the first base pattern (51) comprising a series of portions spaced along one radius of the disk, an individual one of the portions being situated at each track centre, and the second base pattern (52) comprising a set of pattern portions, an individual one of the portions lying substantially continuously over each radius of a plurality of radii defining the positions of servo sectors; and (b) writing a servo sector pattern on each of the record surfaces of the disks (18, 62) under control provided by detection of the base patterns (51, 52) on the one disk (18).

2. A method as claimed in claim 1, in which step (a) is performed on the said one of the disks before the disks are installed in the data storage device and step (b) is performed after the disks are installed in the data storage device.

## Patentansprüche

1. Ein Verfahren zum Schreiben eines Sektorservomusters auf jedem einer Mehrzahl von Aufzeichnungsplatten (18, 62), die koaxial in einer Datenspeichervorrichtung montiert sind, wobei das Verfahren die nachstehenden aufeinanderfolgenden Schritte umfaßt: (a) Schreiben erster und zweiter Grundmuster (51, 52) auf eine (18) der Platten, wobei das erste Grundmuster (51) eine Reihe von Abschnitten umfaßt, die mit Zwischenräumen entlang einem Radius der Platte angeordnet sind, und sich jeweils ein einzelner der Abschnitte auf jeder Spurmitte befindet und wobei das zweite Grundmuster (52) eine Menge von Musterabschnitten umfaßt, von denen jeweils einer der Abschnitte im wesentlichen kontinuierlich über jedem Radius aus einer Mehrzahl von Radien liegt, die die Positionen der Servosektoren definieren; und (b) Schreiben eines Servosektormusters auf jede der Aufzeichnungsoberflächen der Platten (18, 62), gesteuert durch die Erkennung der Grundmuster (51, 52) auf der einen Platte (18).

2. Ein Verfahren wie in Anspruch 1 beansprucht, wobei Schritt (a) auf der einen der Platten durchgeführt wird, bevor die Platten in die Datenspeichervorrichtung installiert werden, und Schritt (b) durchgeführt wird, nachdem die Platten in die Datenspeichervorrichtung installiert werden.

## Revendications

1. Un procédé d'écriture d'une servo-configuration de secteurs sur chacun d'une pluralité de disques d'enregistrement (18, 62) montés co-axialement dans un dispositif de mémoire de données, le procédé comprenant les étapes successives suivantes:
a) l'écriture de première et seconde configurations de base (51, 52) sur l'un (18) des disques, la première configuration de base (51) comprenant une série de parties espacées sur un rayon du disque, l'une desdites parties étant située au centre de chaque piste, et la seconde configuration de base (52) comprenant un ensemble de parties de configuration, l'une des parties recouvrant de manière pratiquement continue chaque rayon d'une pluralité de rayons définissant les positions des servo-secteurs, et
b) l'écriture d'une servo-configuration de secteur sur chacune des surfaces d'enregistrement des disques (18, 62) sous la commande assurée par la détection des configurations de base (51, 52) sur le premier disque (18).

2. Un procédé selon la revendication 1 dans lequel l'étape (a) est exécutée sur ledit premier des disques avant le montage des disques dans le dispositif de mémoire de données et l'étape (b) est exécutée après le montage des disques dans le dispositif de mémoire de données.
